# EUROPÄISCHE PATENTSCHRIFT

(11) **EP 1 331 714 B1**
(45) Veröffentlichungstag und Bekanntmachung des Hinweises auf die Patenterteilung: **12.03.2014**
(21) Anmeldenummer: 03001497.1
(22) Anmeldetag: 23.01.2003
(51) Int. Cl.: H02H 3/14

(54) **Verfahren zur Netzteilkondensator-Entladung**
Method for discharging a power supply capacitor
Méthode pour la décharge de condensateur d'alimentation

(30) Priorität: 28.01.2002 DE 10203412
(43) Veröffentlichungstag der Anmeldung: 30.07.2003
(73) Patentinhaber: Diehl AKO Stiftung & Co. KG, 88239 Wangen (DE)
(72) Erfinder: Otto, Michael, 90530 Wendelstein (DE); Grundl, Peter, 90491 Nürnberg (DE)
(74) Vertreter: Diehl Patentabteilung

(56) Entgegenhaltungen:
- EP-A- 1 110 773
- DE-A1- 4 235 138
- US-A- 5 999 429

## Beschreibung

Die Erfindung betrifft ein Verfahren zur Entladung eines Kondensators eines Kondensatometzteils nach dem Oberbegriff des Patentanspruchs 1 sowie eine Schaltung zur Durchführung dieses Verfahrens.

Beim Abschalten bzw. Abtrennen der Netzspannung von einem Kondensatometzteil (z. B. durch Ausstecken des Netzkabels aus der Steckdose) liegt an den Anschlüssen des Gerätesteckers kurzfristig eine Spannung an, da der Kondensator des Kondensatornetzteils noch nicht entladen ist.

Um die Sicherheit beim Umgang mit solchen Geräten zu gewährleisten, muss dafür gesorgt werden, dass sich der Netzteilkondensator möglichst schnell entlädt. Dies wird durch Paralleischalten eines Widerstands, über den eine schnelle Entladung erfolgen kann, zum Netzteilkondensator erreicht.

Die Paralleischaltung dieses Entladewiderstands hat allerdings den Nachteil, dass im normalen Betrieb des Kondensatometzteils ständig Strom über den Entladewiderstand fließt. Dadurch entsteht eine nicht unbeachtliche Verlustleistung.

Das US-Patent Nr. 6,999,429 offenbart ein Schaltnetzteil, bei dem ein Glättungskondensator auf der Gleichspannungsseite des Netzteils über eine Primärwicklung eines Umsetzers entladen wird, wenn das Netzteil von der Spannungsversorgung getrennt wird.

Aus der EP 1 110 773 A2 ist eine Gleichstromversorgung für einen Kompressor einer Kraftfahrzeug-Klimaanlage bekannt, bei welcher der parallel zur Fahrzeugbatterie geschaltete Glättungskondensator nach Abschaltung des Kompressors über diesen entladen wird.

Die DE 42 35 138 A1 beschreibt eine Schutzentladung von Gleichspannungskondensatoren in Stromrichteranlagen, bei welcher der Zwischenkreiskondensator auf der Gleichspannungsseite bei Abschaltung der Anlage über die angeschlossenen Lasten entladen wird.

Aufgabe der Erfindung ist es nun, ein Verfahren zur Entladung eines Netzteilkondensators sowie eine Schaltung zur Durchführung dieses Verfahrens ohne den genannten Nachteil zu schaffen.

Dies wird durch ein Verfahren mit den Merkmalen des Patentanspruchs 1 bzw. eine Schaltung mit den Merkmalen des Patentanspruchs 4 erreicht. Ausführungsformen und Weiterbildungen der Erfindung sind in den Unteransprüchen 2 und 3 sowie 5 bis 7 erläutert.

Über die Wirkverbindung der Steuereinheit mit dem Stromnetz bzw. dem Kondensatometzteil "erkennt" die Steuereinheit, wenn die Netzspannung abgeschaltet bzw. abgetrennt wird. Da sie nach Netzabschaltung/-abtrennung noch kurze Zeit weiterarbeiten kann, kann die Steuerschaltung noch einen Schalter betätigen, über welchen der Netzteilkondensator kurzgeschlossen wird. Dadurch kann der dem Netzteilkondensator parallel geschaltete Entladewiderstand entfallen, wodurch das Entstehen von Verlustleistung durch einen Stromfluss über den Entladewiderstand im normalen Betrieb des Kondensatornetzteils verhindert wird.

Vorzugsweise wird der Netzteilkondensator über eine der Spannungsstabilisierung des Kondensatornetzteils dienende Zener-Diode, einen geschlossenen Lastschalter des elektrischen Verbrauchers sowie den elektrischen Verbraucher selbst kurzgeschlossen.

Die Wirkverbindung zwischen der Steuereinheit und dem Stromnetz bzw. dem Kondensatometzteil erfolgt bevorzugt über eine Pegelanpassungsschaltung.

Die Schaltung zur Durchführung des Verfahrens weist ein Kondensatometzteil mit Netzteilkondensator und eine mit dem Stromnetz bzw. dem Kondensatornetzteil wirkverbundene Steuereinheit auf, wobei über die Wirkverbindung in der Steuereinheit das Abschalten bzw. Abtrennen der Netzspannung erkennbar Ist und der Netzteilkondensator von der Steuereinheit bei Erkennen einer Netzabschaltung bzw. -abtrennung zumindest für kurze Zeit kurzgeschlossen werden kann.

Vorzugsweise wird die Steuereinheit durch einen Mikroprozessor und die Wirkverbindung zwischen Steuereinheit und Stromnetz bzw. Kondensatornetzteil über eine Pegelanpassungsschaltung gebildet.

Weiterhin ist vorgesehen, dass der Netzteilkondensator über einen bevorzugt als Zener-Diode ausgebildeten Spannungsstabilisator, einen von der Steuereinheit schließbaren Lastschalter des elektrischen Verbrauchers und den elektrischen Verbraucher selbst kurzgeschlossen wird.

Im folgenden wird die Erfindung anhand der Zeichnungen näher erläutert. Es zeigen
Figur 1 eine Schaltung nach dem Stand der Technik und
Figur 2 eine Schaltung gemäß der Erfindung.

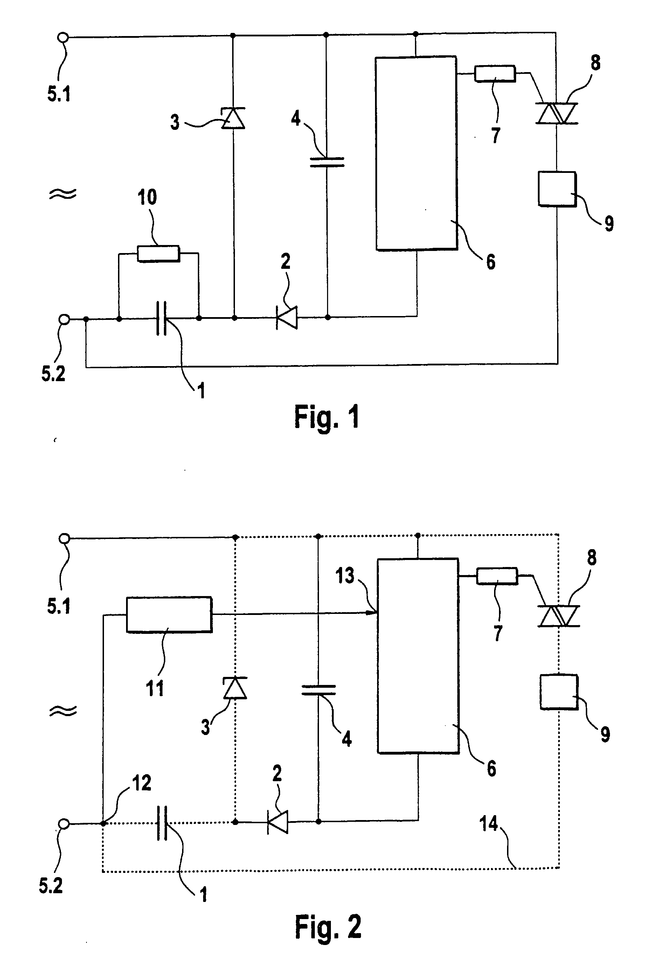

Eine Schaltung gemäß dem Stand der Technik (Fig. 1) enthält ein Kondensatornetzteil, bestehend aus einem Kondensator 1 (Netzteilkondensator), einer Diode 2 als Gleichrichter, einer Zener-Diode 3 zur Spannungsstabilisierung sowie einen Kondensator 4 zur Glättung der gleichgerichteten Spannung. Das Kondensatornetzteil ist mit seinen Anschlüssen 5.1 und 5.2 an ein 230-V-Wechselstromnetz angeschlossen und versorgt einen Mikroprozessor 6 mit elektrischer Energie. Die Zener-Diode 3 ist so gewählt, dass ihre Durchbruchsspannung der Versorgungsspannung des Mikroprozessors (üblicherweise zwischen 3 und 5 V) entspricht. Der Mikroprozessor 6 steuert über einen Zwischenwiderstand 7 einen elektronischen Schalter 8 (z. B. einen Triac), welcher einen Verbraucher 9 an die Netzwechselspannung anschließt.

Um eine ausreichend schnelle Entladung des Netzteilkondensators bei Abschaltung bzw. Abtrennung der Netzspannung vom Kondensatornetzteil zu erreichen, ist dem Netzteilkondensator 1 ein Entladewiderstand 10 parallel geschaltet. Bei einer Kapazität des Netzteilkondensators 1 von 1,5 µF und einer Netzspannung von 230 V beträgt der Widerstand des Entladewiderstands 10 üblicherweise etwa 220 kOhm. Damit entsteht beim Betrieb des Kondensatornetzteils nach der Gleichung P = U *U / R eine Verlustleistung von etwa 240 mW durch den bei Anlegen der Netzspannung ständig über den Entladewiderstand fließenden Strom.

In der erfindungsgemäßen Ausgestaltung der Schaltung (Fig. 2) wird auf den Entladewiderstand 10 verzichtet. Dagegen ist eine Pegelanpassungsschaltung 11 vorgesehen, welche zum einen über einen Knoten 12 mit der Netzspannung und zum anderen über einen Anschluss 13 des Mikroprozessors 6 mit diesem wirkverbunden ist. Die Pegelanpassungsschaltung nimmt die Netzspannungs-Wellen auf, setzt deren Spannungsamplitude von 230 V auf einen für den Mikroprozessor 6 passenden Wert (üblicherweise zwischen 3 und 5 V) herab und leitet die heruntergesetzten Wellen über den Anschluss 13 an den Mikroprozessor 6 weiter.

Wenn nun die Netzspannung abgeschaltet bzw. abgetrennt wird, liegt am Eingang 13 des Mikroprozessors kein entsprechendes Signal mehr an. Da der Mikroprozessor 6 auch nach Netzabschaltung bzw. -abtrennung (u. a. wegen der Aufladung des Glättungskondensators 4) noch über eine kurze Zeitdauer (üblicherweise zwischen 100 und 200 ms) weiterarbeitet, erkennt er das Ausbleiben des Signals am Anschluss 13 und schaltet über den Vorwiderstand 7 den elektronischen Schalter 8 durch, so dass der Netzteilkondensator 1 gemäß der gestrichelten Linie 14 in Fig. 2 über die Zener-Diode 3, den elektronischen Schalter 8 und den Verbraucher 9 kurzgeschlossen und damit entladen wird.

Auf diese Weise ist eine schnelle und wirkungsvolle Entladung des Netzteilkondensators 1 gewährleistet, so dass bei einer Abschaltung bzw. Abtrennung der Netzspannung die an den Anschlüssen 5.1 und 5.2 anliegende Spannung, die durch die Aufladung des Netzteilkondensators 1 hervorgerufen wird, sehr schnell abklingt.

Anwendung findet die Erfindung bei allen denkbaren elektrischen und elektronischen Geräten, bei denen ein Kondensatornetzteil zur Stromversorgung einer Steuerungseinheit benutzt wird. Als Beispiel seien hier lediglich Kühl- und Tiefkühlgeräte genannt, bei denen durch die Erfindung die vom VDE geforderte Sicherheitsbedingung erfüllt wird, dass die Spannung am Gerätestecker eine Sekunde nach der Netztrennung (durch Ausstecken des Gerätes) maximal 34 V betragen darf. Gleichzeitig wird durch die genannte Vermeidung der Verlustleistung die Wirkleistungsaufnahme der Steuerung der entsprechenden Geräte reduziert.

## Patentansprüche

1. Verfahren zur Entladung eines Netzteilkondensators (1) eines Kondensatornetzteils bei Abschaltung oder Abtrennung einer Netzspannung, wobei das Kondensatornetzteil der Stromversorgung einer Steuereinheit (6) aus einem Stromnetz und die Steuereinheit (6) der Ansteuerung eines elektrischen Verbrauchers (9) dient, wobei das Kondensatornetzteil (1-4) einen mit einem Netzanschluss (5.2) verbundenen Netzteilkondensator (1) in seinem Wechselstromkreis aufweist,
**dadurch gekennzeichnet,**
**dass** die Steuereinheit (6) mit dem Stromnetz oder dem Kondensatornetzteil derart wirkverbunden ist, dass sie das Abschalten und/oder Abtrennen der Netzspannung erkennt, und die Steuereinheit (6) den Netzteilkondensator (1) bei Erkennen einer Netzabschaltung/-abtrennung kurzschließt.

2. Verfahren nach Anspruch 1,
**dadurch gekennzeichnet,**
**dass** der Netzteilkondensator (1) über eine Zenerdiode (3), die der Spannungsstabilisierung des Kondensatornetzteils dient, über einen geschlossenen Lastschalter (8) des elektrischen Verbrauchers (9) und über den elektrischen Verbraucher (9) kurzgeschlossen wird.

3. Verfahren nach Anspruch 1 oder 2,
**dadurch gekennzeichnet,**
**dass** die Wirkverbindung zwischen der Steuereinheit (6) und dem Stromnetz oder dem Kondensatornetzteil über eine Pegelanpassungeschaltung (11) erfolgt.

4. Schaltung zur Durchführung des Verfahrens nach einem der Ansprüche 1 bis 3,
**dadurch gekennzeichnet,**
**dass** das Kondensatometzteil (1-4) einen mit einem Netzanschluss (5.2) verbundenen Netzteilkondensator (1) in seinem Wechselstromkreis aufweist, dass die Steuereinheit (6) einen mit dem Stromnetz oder dem Kondensatometzteil (1-4) wirkverbundenen Anschluss (13) aufweist, über den das Abschalten und/oder Abtrennen der Netzspannung erkennbar ist, und dass der Netzteilkondensator (1) bei Erkennen einer Netzabschaltung/- abtrennung durch die Steuereinheit (6) kurzschließbar ist.

5. Schaltung nach Anspruch 4,
**dadurch gekennzeichnet,**
**dass** die Steuereinheit (6) durch einen Mikroprozessor gebildet ist und die Wirkverbindung der Steuereinheit (6) mit dem Stromnetz oder dem Kondensatornetzteil über eine Pegelanpassungsschaltung (11) erfolg.

6. Schaltung nach Anspruch 4 oder 5,
**dadurch gekennzeichnet,**
**dass** der Netzteilkondensator (1) über einen vorzugsweise als Zener-Diode (3) ausgeführten Spannungsstabilisator, über einen von der Steuereinheit (6) schließbaren Lastschalter (8) des elektrischen Verbrauchers (9) und über den elektrischen Verbraucher (9) kurzschließbar ist.

## Claims

1. Method for discharging a switched mode power supply capacitor (1) of a capacitor switched mode power supply on disconnection or isolation of a mains voltage, wherein the capacitor switched mode power supply is used for supplying power to a control unit (6) from an electrical grid and the control unit (6) is used for actuating an electrical consumer (9), wherein the capacitor switched mode power supply (1 - 4) has a switched mode power supply capacitor (1), which is connected to a mains connection (5.2), in the AC circuit of said capacitor switched mode power supply, **characterized in that** the control unit (6) is operatively connected to the electrical grid or to the capacitor switched mode power supply in such a way that it identifies the disconnection and/or isolation of the mains voltage, and the control unit (6) short-circuits the switched mode power supply capacitor (1) on identification of a disconnection/isolation of the grid.

2. Method according to Claim 1, **characterized in that** the switched mode power supply capacitor (1) is shortcircuited via a zener diode (3), which is used for the voltage stabilization of the capacitor switched mode power supply, via a closed load interrupter switch (8) of the electrical consumer (9), and via the electrical consumer (9).

3. Method according to Claim 1 or 2, **characterized in that** the operative connection between the control unit (6) and the electrical grid or the capacitor switched mode power supply is provided via a level-matching circuit (11).

4. Circuit for implementing the method according to one of Claims 1 to 3, **characterized in that** the capacitor switched mode power supply (1 - 4) has a switched mode power supply capacitor (1), which is connected to a mains connection (5.2), in the AC circuit of said capacitor switched mode power supply, **in that** the control unit (6) has a connection (13) which is operatively connected to the electrical grid or the capacitor switched mode power supply (1 - 4) and via which the disconnection and/or isolation of the mains voltage can be identified, and **in that** the switched mode power supply capacitor (1) is short-circuitable by the control unit (6) on identification of a disconnection/isolation of the grid.

5. Circuit according to Claim 4, **characterized in that** the control unit (6) is formed by a microprocessor, and the operative connection of the control unit (6) to the electrical grid or the capacitor switched mode power supply is provided via a level-matching circuit (11).

6. Circuit according to Claim 4 or 5, **characterized in that** the switched mode power supply capacitor (1) is short-circuitable via a voltage stabilizer, which is preferably in the form of a zener diode (3), via a load interrupter switch (8), which can be closed by the control unit (6), of the electrical consumer (9), and via the electrical consumer (9).

## Revendications

1. Procédé pour décharger un condensateur de bloc d'alimentation secteur (1) d'un bloc d'alimentation secteur à condensateur lors de la déconnexion ou du débranchement d'une tension de réseau, selon lequel le bloc d'alimentation secteur à condensateur sert à l'alimentation électrique d'une unité de commande (6) depuis un réseau électrique et l'unité de commande (6) à la commande d'un appareillage électrique (9), le bloc d'alimentation secteur à condensateur (1-4) présentant dans son circuit de courant alternatif un condensateur de bloc d'alimentation secteur (1) relié avec une borne de réseau (5.2),
**caractérisé en ce**
**que** l'unité de commande (6) est en liaison active avec le réseau électrique ou le bloc d'alimentation secteur à condensateur de telle sorte qu'elle détecte la déconnexion et/ou le débranchement de la tension de réseau et l'unité de commande (6) court-circuite le condensateur de bloc d'alimentation secteur (1) en cas de détection d'une déconnexion/d'un débranchement du réseau.

2. Procédé selon la revendication 1, **caractérisé en ce que** le condensateur de bloc d'alimentation secteur (1) est court-circuité par le biais d'une diode zener (3) qui sert à la stabilisation de la tension du bloc d'alimentation secteur à condensateur, par le biais d'un contacteur de charge (8) fermé de l'appareillage électrique (9) et par le biais de l'appareillage électrique (9).

3. Procédé selon la revendication 1 ou 2, **caractérisé en ce que** la liaison active entre l'unité de commande (6) et le réseau électrique ou le bloc d'alimentation secteur à condensateur est réalisée par le biais d'un circuit d'adaptation du niveau (11).

4. Circuit pour mettre en oeuvre le procédé selon l'une des revendications 1 à 3,
**caractérisé en ce**
**que** le bloc d'alimentation secteur à condensateur (1-4) présente dans son circuit de courant alternatif un condensateur de bloc d'alimentation secteur (1) relié avec une borne de réseau (5.2),
en ce que l'unité de commande (6) présente une borne (13) en liaison active avec le réseau électrique ou le bloc d'alimentation secteur à condensateur (1-4), par le biais de laquelle la déconnexion et/ou le débranchement de la tension de réseau peut être détecté,
et en ce que le condensateur de bloc d'alimentation secteur (1) peut être court-circuité par l'unité de commande (6) en cas de détection d'une déconnexion/d'un débranchement du réseau.

5. Circuit selon la revendication 4, **caractérisé en ce que** l'unité de commande (6) est formée par un microprocesseur et la liaison active de l'unité de commande (6) avec le réseau électrique ou avec le bloc d'alimentation secteur à condensateur est réalisée par le biais d'un circuit d'adaptation du niveau (11).

6. Circuit selon la revendication 4 ou 5, **caractérisé en ce que** le condensateur de bloc d'alimentation secteur (1) peut être court-circuité par le biais d'un stabilisateur de tension réalisé de préférence sous la forme d'une diode zener (3), par le biais d'un contacteur de charge (8) de l'appareillage électrique (9) qui peut être fermé par l'unité de commande (6) et par le biais de l'appareillage électrique (9).
